# FASCICULE DE BREVET EUROPEEN

(11) **EP 3 077 222 B1**
(45) Date de publication et mention de la délivrance du brevet: **01.01.2020**
(21) Numéro de dépôt: 14802887.1
(22) Date de dépôt: 25.11.2014
(51) Int. Cl.: B60C 9/00, B60C 9/08, B60C 13/00, B60C 9/02

(54) **PNEUMATIQUE COMPORTANT DES CABLES D'ARMATURES DE CARCASSE PRESENTANT UNE FAIBLE PERMEABILITE, ET DES EPAISSEURS DE MELANGES CAOUTCHOUTEUX VARIABLES**
REIFEN MIT KARKASSENVERSTÄRKUNGSFASERN MIT GERINGER PERMEABILITÄT UND VARIABLER KAUTSCHUKMISCHUNGSDICKEN
TYRE COMPRISING CARCASS REINFORCEMENT CORDS HAVING LOW PERMEABILITY AND VARIABLE RUBBER MIXTURE THICKNESSES

(30) Priorité: 03.12.2013 FR 1361987
(43) Date de publication de la demande: 12.10.2016
(73) Titulaire: Compagnie Générale des Etablissements Michelin, 63000 Clermont-Ferrand (FR)
(72) Inventeur: BUFFETAUD, Benoît, F-63040 Clermont-Ferrand Cedex 9 (FR); NOEL, Sébastien, F-63040 Clermont-Ferrand Cedex 9 (FR); GODEAU, Gilles, F-63040 Clermont-Ferrand Cedex 9 (FR)
(74) Mandataire: Le Cam, Stéphane Georges Elie
(86) Numéro de dépôt international: PCT/EP2014/075544
(87) Numéro de publication internationale: WO 2015/082260

(56) Documents cités:
- WO-A1-2010/055118
- FR-A1- 2 950 838
- JP-A- 2003 165 303
- US-A1- 2012 261 046

## Description

La présente invention concerne un pneumatique, à armature de carcasse radiale et plus particulièrement un pneumatique destiné à équiper des véhicules portant de lourdes charges et roulant sur des sols non bitumés tels que des voies de chantiers, tels que, par exemple les camions, tracteurs ou remorques.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Dans le cas des pneumatiques pour véhicules "Poids-Lourds", une seule couche de protection est habituellement présente et ses éléments de protection sont, dans la plupart des cas, orientés dans la même direction et avec le même angle en valeur absolue que ceux des éléments de renforcement de la couche de travail radialement la plus à l'extérieur et donc radialement adjacente.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

Certains pneumatiques actuels, dits "d'approche chantier", sont destinés à rouler à des vitesses relativement modestes, sur des trajets peu importants et sur des sols accidentés. L'ensemble des conditions, sous lesquelles un tel pneumatique est appelé à rouler, peut conduire à un endommagement de la bande de roulement important mais associée à une durée d'usage dans le temps relativement longue du fait des faibles kilométrages parcourus; par contre, du fait des conditions de roulage et des durées d'utilisation, l'endurance des pneumatiques est pénalisée.

Les conditions de roulages particulièrement sévères des pneumatiques du fait des sols accidentés font effectivement apparaître des limites en termes d'endurance de ces pneumatiques.

Les éléments de l'armature de carcasse sont notamment soumis à des contraintes de flexion et compression lors des roulages qui vont à l'encontre de leur endurance. Les câbles qui constituent les éléments de renforcement des couches de carcasse sont en effet soumis à des contraintes importantes lors du roulage des pneumatiques, notamment à des flexions ou variations de courbure répétées induisant au niveau des fils des frottements, et donc de l'usure, ainsi que de la fatigue ; Ce phénomène est qualifié de "fatigue-fretting".

Pour remplir leur fonction de renforcement de l'armature de carcasse du pneumatique, lesdits câbles doivent tout d'abord présenter une bonne flexibilité et une endurance élevée en flexion, ce qui implique notamment que leurs fils présentent un diamètre relativement faible, de préférence inférieur à 0,28 mm, plus préférentiellement inférieur à 0,25 mm, plus petit généralement que celui des fils utilisés dans les câbles conventionnels pour les armatures de sommet des pneumatiques.

Les câbles de l'armature de carcasse sont également sujets à des phénomènes dits de "fatigue-corrosion" dus à la nature même des câbles qui favorisent le passage voire drainent des agents corrosifs tels que l'oxygène et l'humidité. En effet, l'air ou l'eau qui pénètrent dans le pneumatique par exemple lors d'une dégradation lors d'une coupure ou plus simplement du fait de la perméabilité, même faible de la surface intérieur du pneumatique, peuvent être conduits par les canaux formés au sein des câbles du fait même de leur structure.

Tous ces phénomènes de fatigue que l'on regroupe généralement sous le terme générique de "fatigue-fretting-corrosion" sont à l'origine d'une dégénérescence progressive des propriétés mécaniques des câbles et peuvent affecter, pour les conditions de roulage les plus sévères, la durée de vie de ces derniers.

Pour améliorer l'endurance de ces câbles de l'armature de carcasse, il est notamment connu d'augmenter l'épaisseur de la couche de caoutchouc qui forme la paroi interne de la cavité du pneumatique pour limiter au mieux la perméabilité de ladite couche. Cette couche est habituellement pour partie composée de butyle de façon à augmenter l'étanchéité du pneumatique. Ce type de matériau présente l'inconvénient d'augmenter le coût du pneumatique.

Il est encore connu de modifier la construction desdits câbles afin notamment d'augmenter leur pénétrabilité par le caoutchouc, et ainsi limiter la dimension du passage des agents oxydants.

Les documents FR-2950838A et US-20120261046A décrivent encore l'utilisation de câbles non frettés présentant au test de perméabilité un débit inférieur à 20 cm³/mn associé à une épaisseur de mélange caoutchouteux entre la surface intérieure de la cavité du pneumatique et le point d'un élément de renforcement métallique de l'armature de carcasse le plus proche de la dite surface intérieure de la cavité est inférieure à 3.5 mm et localement des épaisseurs plus importantes pour limiter les risques liés à la corrosion lors d'usages sévères.

Par ailleurs, l'usage de pneumatiques sur des véhicules pour poids-lourds de type « approche chantier », notamment lorsqu'ils sont en monte jumelée sur un essieu moteur ou sur des remorques conduit à des utilisations non voulues en mode dégonflé. En effet, les analyses réalisées montrent qu'il est fréquent que des pneumatiques soient utilisés en mode sous-gonflé sans que le chauffeur s'en aperçoive. Des pneumatiques sous-gonflés sont ainsi régulièrement utilisés. Le pneumatique ainsi utilisé subit des déformations plus importantes que dans les conditions normales d'utilisation qui peuvent conduire à une déformation des câbles de l'armature de carcasse de type « flambement » qui sont fortement pénalisant notamment pour supporter les contraintes liées aux pressions de gonflage.

Afin de limiter ce problème lié au risque de flambement des éléments de renforcement de l'armature de carcasse, il est connu d'utiliser des câbles frettés par un fil supplémentaire entourant le câble et prévenant tous risques de flambement du câble ou des fils constitutifs du câble. Les pneumatiques ainsi réalisés, s'ils présentent moins de risques d'endommagement liés à des roulages à faible pression de gonflage, présentent des performances en termes d'endurance en flexion atténuées du fait notamment du frottement entre le fil de frette et les fils extérieurs du câble lors des déformations du pneumatique en roulage.

Les inventeurs se sont ainsi donnés pour mission de fournir des pneumatiques pour véhicules lourds pour "Poids-Lourds" de type « approche chantier », dont les performances d'usure sont conservées et dont les performances notamment d'endurance sont améliorées notamment au regard des phénomènes de "fatigue-corrosion" ou de "fatigue-fretting-corrosion", quelles que soient les conditions de roulage notamment en termes de gonflage et dont le coût de fabrication est réduit.

Ce but a été atteint selon l'invention par un pneumatique tel que défini dans la revendication 1.

Au sens de l'invention, une extrémité d'épaulement est définie, dans la zone de l'épaule du pneumatique, par la projection orthogonale sur la surface extérieure du pneumatique de l'intersection des tangentes aux surfaces d'une extrémité axialement extérieure de la bande de roulement (sommet des sculptures) d'une part et de l'extrémité radialement extérieure d'un flanc d'autre part.

Le test dit de perméabilité permet de déterminer la perméabilité longitudinale à l'air des câbles testés, par mesure du volume d'air traversant une éprouvette sous pression constante pendant un temps donné. Le principe d'un tel test, bien connu de l'homme du métier, est de démontrer l'efficacité du traitement d'un câble pour le rendre imperméable à l'air ; il a été décrit par exemple dans la norme ASTM D2692-98.

Le test est réalisé sur des câbles extraits directement, par décorticage, des nappes de caoutchouc vulcanisées qu'ils renforcent, donc pénétrés par le caoutchouc cuit.

Le test est réalisé sur 2 cm de longueur de câble, enrobé donc par sa composition de caoutchouc (ou gomme d'enrobage) environnante à l'état cuit, de la manière suivante : on envoie de l'air à l'entrée du câble, sous une pression de 1 bar, et on mesure le volume d'air à la sortie, à l'aide d'un débitmètre (calibré par exemple de 0 à 500 cm³/min). Pendant la mesure, l'échantillon de câble est bloqué dans un joint étanche comprimé (par exemple un joint en mousse dense ou en caoutchouc) de telle manière que seule la quantité d'air traversant le câble d'une extrémité à l'autre, selon son axe longitudinal, est prise en compte par la mesure ; l'étanchéité du joint étanche lui-même est contrôlée préalablement à l'aide d'une éprouvette de caoutchouc pleine, c'est-à-dire sans câble.

Le débit d'air moyen mesuré (moyenne sur 10 éprouvettes) est d'autant plus faible que l'imperméabilité longitudinale du câble est élevée. La mesure étant faite avec une précision de ± 0,2 cm³/min, les valeurs mesurées inférieures ou égales à 0,2 cm³/min sont considérées comme nulles ; elles correspondent à un câble qui peut être qualifié d'étanche (totalement étanche) à l'air selon son axe (i.e., dans sa direction longitudinale).

Ce test de perméabilité constitue en outre un moyen simple de mesure indirecte du taux de pénétration du câble par une composition de caoutchouc. Le débit mesuré est d'autant plus faible que le taux de pénétration du câble par le caoutchouc est élevé.

Le taux de pénétration d'un câble peut encore être estimé selon la méthode décrite ci-après. Dans le cas d'un câble à couches, la méthode consiste dans un premier temps à éliminer la couche extérieure sur un échantillon d'une longueur comprise entre 2 et 4 cm pour ensuite mesurer selon une direction longitudinale et selon un axe donné la somme des longueurs de mélange caoutchouteux rapporté sur la longueur de l'échantillon. Ces mesures de longueurs de mélange caoutchouteux excluent les espaces non pénétrés sur cet axe longitudinal. Ces mesures sont répétées sur trois axes longitudinaux répartis sur la périphérie de l'échantillon et répétées sur cinq échantillons de câbles.

Lorsque le câble comporte plusieurs couches, la première étape d'élimination est répétée avec la couche nouvellement extérieure et les mesures de longueurs de mélange caoutchouteux selon des axes longitudinaux.

Une moyenne de tous les rapports de longueurs de mélange caoutchouteux sur les longueurs des échantillons ainsi déterminés est ensuite effectuée pour définir le taux de pénétration du câble.

L'épaisseur de mélange caoutchouteux entre la surface intérieure de la cavité du pneumatique et le point d'un élément de renforcement le plus proche de la dite surface est égale à la longueur de la projection orthogonale de l'extrémité du point d'un élément de renforcement le plus proche de la dite surface sur la surface intérieure de la cavité du pneumatique.

Les mesures d'épaisseur de mélange caoutchouteux sont effectuées sur une coupe transversale d'un pneumatique, le pneumatique étant donc dans un état non gonflé.

Selon un mode de réalisation préféré de l'invention, les câbles de l'armature de carcasse présentent au test dit de perméabilité un débit inférieur à 10 cm³/mn et de préférence encore inférieur à 2 cm³/mn.

Les inventeurs ont su mettre en évidence qu'un pneumatique ainsi réalisé selon l'invention conduit à des améliorations en termes de compromis endurance coûts de fabrication très intéressants. En effet, les propriétés d'endurance avec un tel pneumatique destiné à des roulages du type « approche chantier » sont au moins aussi bonnes qu'avec les meilleures solutions évoquées ci-dessus que ce soit dans des conditions de roulage normales ou bien dans des conditions de roulage en mode sous-gonflé. Par ailleurs, l'épaisseur de la couche de mélange caoutchouteux entre l'armature de carcasse et la cavité du pneumatique étant au moins localement réduite par rapport à des pneumatiques usuels et celle-ci constituant un des composants les plus onéreux du pneumatique, le coût de fabrication du pneumatique est inférieur à celui d'un pneumatique usuel.

Les câbles de l'armature de carcasse présentant au test dit de perméabilité un débit inférieur à 20 cm³/mn permettent d'une part de limiter les risques liés à la corrosion et d'autre part semble conférer un effet contre le flambement des câbles permettant ainsi de réduire l'épaisseur des mélanges caoutchouteux entre la surface intérieure de la cavité du pneumatique et l'armature de carcasse.

Les inventeurs ont par ailleurs su mettre en évidence que l'augmentation de l'épaisseur de la couche de mélange caoutchouteux entre l'armature de carcasse et la cavité du pneumatique sur deux parties du profil méridien du pneumatique est nécessaire pour limiter les rayons de courbure des éléments de renforcement de l'armature de carcasse en cas de roulage en mode dégonflé du fait des sollicitations extrêmes subies par les pneumatiques sur des sol accidentés et notamment caillouteux et ainsi contribuer à lutter contre le flambement de câbles. En effet, les inventeurs ont su mettre en évidence que l'augmentation locale des épaisseurs de mélange caoutchouteux n'est pas réalisée pour limiter des risques de corrosion des câbles comme décrit précédemment mais pour jouer un rôle « mécanique » permettant de limiter l'apparition de rayons de courbure trop petits au niveau des éléments de renforcement de l'armature de carcasse et prévenir en combinaison avec le choix des câbles de l'armature de carcasse présentant au test dit de perméabilité un débit inférieur à 20 cm³/mn les phénomènes de flambement des câbles. Des rayons de courbure trop petits atteints par les éléments de renforcement de l'armature de carcasse sont en effet néfastes pour les performances d'endurance des câbles et donc de l'armature de carcasse.

Les inventeurs ont ainsi su trouver un compromis entre le coût de fabrication du pneumatique et ses performances d'endurance, en conservant de propriétés d'usure satisfaisantes. L'augmentation locale des épaisseurs de mélange caoutchouteux contribue à une augmentation du coût, modérée du fait de la nature du mélange, mais assure en combinaison avec le choix des câbles de l'armature de carcasse présentant au test dit de perméabilité un débit inférieur à 20 cm³/mn des performances d'endurance satisfaisantes malgré les conditions d'utilisation de ces pneumatiques de type « approche chantier ».

Selon mode de réalisation préféré de l'invention, dans un plan radial, l'épaisseur de mélange caoutchouteux entre la surface intérieure de la cavité du pneumatique et le point d'un élément de renforcement métallique de l'armature de carcasse le plus proche de la dite surface intérieure de la cavité est supérieure à 1.0 mm et inférieure ou égale à 3.0 mm sur au moins 60 % du profil méridien du pneumatique.

Avantageusement selon l'invention, dans un plan radial, le rapport entre des épaisseurs de mélange caoutchouteux entre la surface intérieure de la cavité du pneumatique et le point d'un élément de renforcement métallique de l'armature de carcasse le plus proche de la dite surface intérieure de la cavité de deux parties distinctes du pneumatique est supérieur ou égal à 1.15 et de préférence supérieur ou égal à 1.18.

Selon l'invention, la longueur méridienne d'une partie centrée, à plus ou moins 20 mm, sur la projection orthogonale des extrémités d'épaulement du pneumatique sur la surface intérieure du pneumatique, dont l'épaisseur de mélange caoutchouteux entre la surface intérieure de la cavité du pneumatique et le point d'un élément de renforcement métallique de l'armature de carcasse le plus proche de la dite surface intérieure de la cavité est supérieure à 2.4 mm et inférieure ou égale à 3.9 mm, est comprise entre 60 et 200 mm.

Selon une réalisation préférée de l'invention, le mélange caoutchouteux entre la cavité du pneumatique et les éléments de renforcement de la couche d'armature de carcasse radialement la plus à l'intérieure étant constitué d'au moins deux couches de mélange caoutchouteux, au niveau des parties du profil méridien du pneumatique présentant une épaisseur de mélange caoutchouteux entre la surface intérieure de la cavité du pneumatique et le point d'un élément de renforcement métallique de l'armature de carcasse le plus proche de la dite surface intérieure de la cavité supérieure à 1.0 mm et inférieure ou égale à 3.0 mm, la couche de mélange caoutchouteux radialement la plus à l'intérieur et formant la surface intérieure de la cavité du pneumatique présente une épaisseur inférieure à 1.4 mm et de préférence inférieure à 1.2 mm. Comme expliqué précédemment, cette couche est habituellement pour partie composée de butyle de façon à augmenter l'étanchéité du pneumatique et ce type de matériau présentant un coût non négligeable, la diminution de l'épaisseur de cette couche est favorable.

De préférence encore selon l'invention, au niveau des parties du profil méridien du pneumatique présentant une épaisseur de mélange caoutchouteux entre la surface intérieure de la cavité du pneumatique et le point d'un élément de renforcement métallique de l'armature de carcasse le plus proche de la dite surface intérieure de la cavité supérieure à 1.0 mm et inférieure ou égale à 3.0 mm, la couche de mélange caoutchouteux radialement adjacente à la couche de mélange caoutchouteux radialement la plus à l'intérieur présente une épaisseur inférieure à inférieure à 1.4 mm et de préférence inférieure à 1.2 mm. L'épaisseur de cette couche dont les constituants permettent notamment de fixer l'oxygène de l'air peut également être réduite de façon à diminuer encore le coût du pneumatique.

Les épaisseurs de chacune de ces deux couches sont égales à la longueur de la projection orthogonale d'un point d'une surface sur l'autre surface de ladite couche.

Avantageusement selon l'invention, la surépaisseur de mélange caoutchouteux des deux parties du profil du pneumatique centrées, à plus ou moins 20 mm, sur la projection orthogonale des extrémités d'épaulement du pneumatique sur la surface intérieure du pneumatique, par rapport aux autres zones du pneumatique est obtenue par l'ajout d'un mélange caoutchouteux radialement à l'intérieur de la couche de mélange assurant l'étanchéité de la cavité du pneumatique. Les inventeurs ont en effet su mettre en évidence qu'il était préférable de ne pas augmenter l'épaisseur du mélange assurant l'étanchéité dans la mesure où celui-ci est très onéreux et la fonction recherchée de ces surépaisseurs étant d'ordre « mécanique ».

Avantageusement encore, cette surépaisseur peut être réalisée avec un mélange caoutchouteux identique à celui de la couche de mélange caoutchouteux radialement adjacente et intérieure à la couche de mélange caoutchouteux assurant l'étanchéité. En effet, ce mélange dont les constituants permettent notamment de fixer l'oxygène de l'air peut présenter outre sa fonction « mécanique » une protection supplémentaire à d'éventuels risques d'oxydation.

Ces surépaisseurs peuvent être obtenues de différentes façons lors de la fabrication du pneumatique. Une première méthode consiste à réaliser la couche de mélange caoutchouteux formant la paroi de la cavité du pneumatique avec le profil souhaité pour former ces surépaisseurs avec les deux mélanges souhaités ceux-ci étant co-extrudés. Une autre méthode consiste à réaliser ces deux zones de surépaisseur par l'ajout de couches de mélanges caoutchouteux supplémentaires localement.

Selon un mode de réalisation avantageux de l'invention, les éléments de renforcement métalliques d'au moins une couche de l'armature de carcasse sont des câbles à au moins deux couches, au moins une couche interne étant gainée d'une couche constituée d'une composition de caoutchouc réticulable ou réticulée, de préférence à base d'au moins un élastomère diénique.

Au sens de l'invention, des câbles, à au moins deux couches, au moins une couche interne étant gainée d'une couche constituée d'une composition polymérique présentent au test dit de perméabilité un débit inférieur à 20 cm3/mn et avantageusement inférieur à 2 cm3/mn.

Par l'expression "composition à base d'au moins un élastomère diénique", on entend de manière connue que la composition comprend à titre majoritaire (i.e. selon une fraction massique supérieure à 50%) ce ou ces élastomères diéniques.

On notera que la gaine selon l'invention s'étend d'une manière continue autour de la couche qu'elle recouvre (c'est-à-dire que cette gaine est continue dans la direction "orthoradiale" du câble qui est perpendiculaire à son rayon), de manière à former un manchon continu de section transversale qui est avantageusement pratiquement circulaire.

On notera également que la composition de caoutchouc de cette gaine est réticulable ou réticulée, c'est-à-dire qu'elle comprend par définition un système de réticulation adapté pour permettre la réticulation de la composition lors de sa cuisson (i.e., son durcissement et non sa fusion) ; ainsi, cette composition de caoutchouc peut être qualifiée d'infusible, du fait qu'elle ne peut pas être fondue par chauffage à quelque température que ce soit.

Par élastomère ou caoutchouc "diénique", on entend de manière connue un élastomère issu au moins en partie (i.e. un homopolymère ou un copolymère) de monomères diènes (monomères porteurs de deux doubles liaisons carbone-carbone, conjuguées ou non).

De préférence, le système de réticulation de la gaine de caoutchouc est un système dit de vulcanisation, c'est-à-dire à base de soufre (ou d'un agent donneur de soufre) et d'un accélérateur primaire de vulcanisation. A ce système de vulcanisation de base peuvent s'ajouter divers accélérateurs secondaires ou activateurs de vulcanisation connus.

La composition de caoutchouc de la gaine selon l'invention comprend, outre ledit système de réticulation, tous les ingrédients habituels utilisables dans les compositions de caoutchouc pour pneumatiques, tels que des charges renforçantes à base de noir de carbone et/ou d'une charge inorganique renforçante telle que silice, des agents anti-vieillissement, par exemple des antioxydants, des huiles d'extension, des plastifiants ou des agents facilitant la mise en œuvre des compositions à l'état cru, des accepteurs et donneurs de méthylène, des résines, des bismaléimides, des systèmes promoteurs d'adhésion connus du type "RFS" (résorcinol-formaldéhyde-silice) ou sels métalliques, notamment des sels de cobalt.

A titre préférentiel, la composition de cette gaine est choisie identique à la composition utilisée pour la matrice de caoutchouc que les câbles selon l'invention sont destinés à renforcer. Ainsi, il n'y a aucun problème d'incompatibilité éventuelle entre les matériaux respectifs de la gaine et de la matrice de caoutchouc.

Selon une variante de l'invention, les éléments de renforcement métalliques d'au moins une couche de l'armature de carcasse sont des câbles métalliques à couches de construction [L+M] ou [L+M+N] utilisable comme élément de renforcement d'une armature de carcasse de pneumatique, comportant une première couche C1 à L fils de diamètre d₁ avec L allant de 1 à 4, entourée d'au moins une couche intermédiaire C2 à M fils de diamètre d₂ enroulés ensemble en hélice selon un pas p₂ avec M allant de 3 à 12, ladite couche C2 étant éventuellement entourée d'une couche externe C3 de N fils de diamètre d₃ enroulés ensemble en hélice selon un pas p₃ avec N allant de 8 à 20, une gaine constituée d'une composition de caoutchouc réticulable ou réticulée à base d'au moins un élastomère diénique, recouvrant, dans la construction [L+M], ladite première couche C1 et, dans la construction [L+M+N], au moins ladite couche C2.

De préférence, le diamètre des fils de la première couche de la couche interne (C1) est compris entre 0.10 et 0.5 mm et le diamètre des fils des couches externes (C2, C3) est compris entre 0.10 et 0.5 mm.

De préférence encore, le pas d'hélice d'enroulement desdits fils de la couche externe (C3) est compris entre 8 et 25 mm.

Au sens de l'invention, le pas représente la longueur, mesurée parallèlement à l'axe du câble, au bout de laquelle un fil ayant ce pas effectue un tour complet autour de l'axe du câble ; ainsi, si l'on sectionne l'axe par deux plans perpendiculaires audit axe et séparés par une longueur égale au pas d'un fil d'une couche constitutive du câble, l'axe de ce fil a dans ces deux plans la même position sur les deux cercles correspondant à la couche du fil considéré.

Avantageusement, le câble présente l'une, et plus préférentiellement encore l'ensemble des caractéristiques suivantes qui est vérifié(e) :
- la couche C3 est une couche saturée, c'est-à-dire qu'il n'existe pas suffisamment de place dans cette couche pour y ajouter au moins un (N+1)ème fil de diamètre d₃, N représentant alors le nombre maximal de fils enroulables en une couche autour de la couche C2 ;
- la gaine de caoutchouc recouvre en outre la couche interne C1 et/ou sépare les fils deux à deux adjacents de la couche intermédiaire C2 ;
- la gaine de caoutchouc recouvre pratiquement la demi-circonférence radialement intérieure de chaque fil de la couche C3, de telle sorte qu'elle sépare les fils deux à deux adjacents de cette couche C3.

De préférence, la gaine de caoutchouc présente une épaisseur moyenne allant de 0,010 mm à 0,040 mm.

D'une manière générale, l'invention peut être mise en œuvre, pour former les câbles de l'armature de carcasse ci-dessus décrits, avec tout type de fils métalliques, notamment en acier, par exemple des fils en acier au carbone et/ou des fils en acier inoxydable. On utilise de préférence un acier au carbone, mais il est bien entendu possible d'utiliser d'autres aciers ou d'autres alliages.

Lorsqu'un acier au carbone est utilisé, sa teneur en carbone (% en poids d'acier) est de préférence comprise entre 0,1% et 1,2%, plus préférentiellement de 0,4% à 1,0% ; ces teneurs représentent un bon compromis entre les propriétés mécaniques requises pour le pneumatique et la faisabilité du fil. Il est à noter qu'une teneur en carbone comprise entre 0,5% et 0,6% rend de tels aciers finalement moins coûteux car plus faciles à tréfiler. Un autre mode avantageux de réalisation de l'invention peut consister aussi, selon les applications visées, à utiliser des aciers à faible teneur en carbone, comprise par exemple entre 0,2% et 0,5%, en raison notamment d'un coût plus bas et d'une plus grande facilité de tréfilage.

Le câble selon l'invention pourra être obtenu selon différentes techniques connues de l'homme du métier, par exemple en deux étapes, tout d'abord par gainage via une tête d'extrusion de l'âme ou structure intermédiaire L+M (couches C1+C2), étape suivie dans un deuxième temps d'une opération finale de câblage ou retordage des N fils restants (couche C3) autour de la couche C2 ainsi gainée. Le problème de collant à l'état cru posé par la gaine de caoutchouc, lors des opérations intermédiaires éventuelles de bobinage et débobinage pourra être résolu de manière connue par l'homme du métier, par exemple par l'emploi d'un film intercalaire en matière plastique.

Selon une variante de réalisation de l'invention, l'armature de sommet du pneumatique est formée d'au moins deux couches de sommet de travail d'éléments de renforcement inextensibles, croisés d'une couche à l'autre en faisant avec la direction circonférentielle des angles compris entre 10° et 45°.

Selon d'autres variantes de réalisation de l'invention, l'armature de sommet comporte encore au moins une couche d'éléments de renforcement circonférentiels.

Une réalisation préférée de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

La couche de protection peut avoir une largeur axiale inférieure à la largeur axiale de la couche de travail la moins large. Ladite couche de protection peut aussi avoir une largeur axiale supérieure à la largeur axiale de la couche de travail la moins large, telle qu'elle recouvre les bords de la couche de travail la moins large et, dans le cas de la couche radialement supérieure comme étant le moins large, telle qu'elle soit couplée, dans le prolongement axial de l'armature additionnelle, avec la couche de sommet de travail la plus large sur une largeur axiale, pour être ensuite, axialement à l'extérieur, découplée de ladite couche de travail la plus large par des profilés d'épaisseur au moins égale à 2 mm. La couche de protection formée d'éléments de renforcement élastiques peut, dans le cas cité ci-dessus, être d'une part éventuellement découplée des bords de ladite couche de travail la moins large par des profilés d'épaisseur sensiblement moindre que l'épaisseur des profilés séparant les bords des deux couches de travail, et avoir d'autre part une largeur axiale inférieure ou supérieure à la largeur axiale de la couche de sommet la plus large.

Selon l'un quelconque des modes de réalisation de l'invention évoqué précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 60° et de même sens que celui de l'angle formé par les éléments de renforcement de la couche radialement la plus proche de l'armature de carcasse.

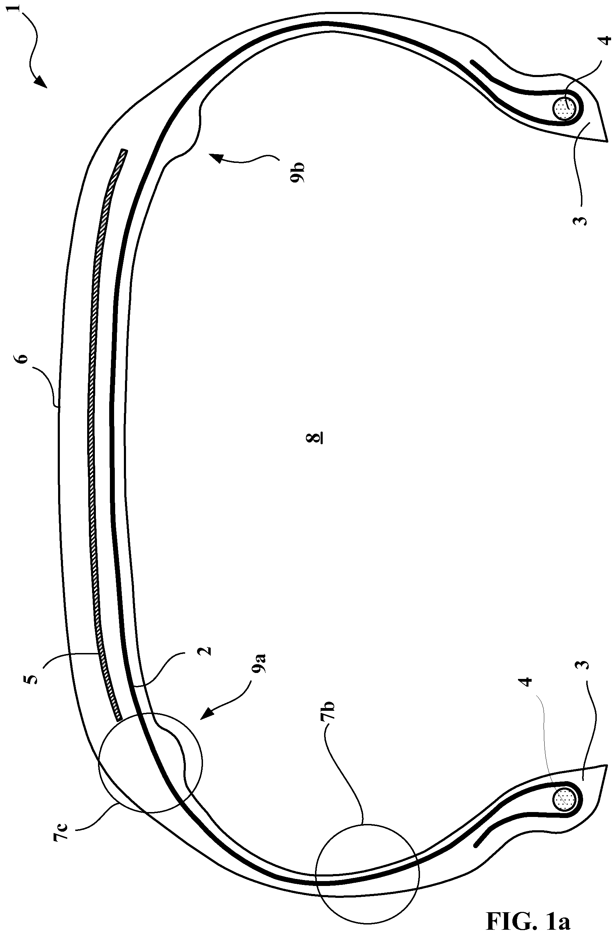

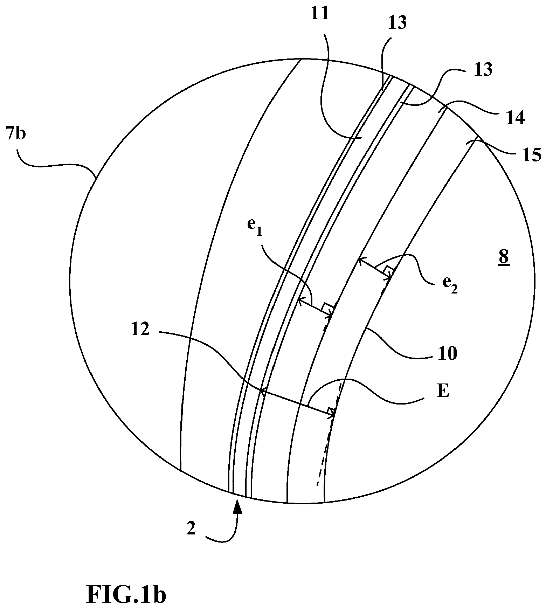

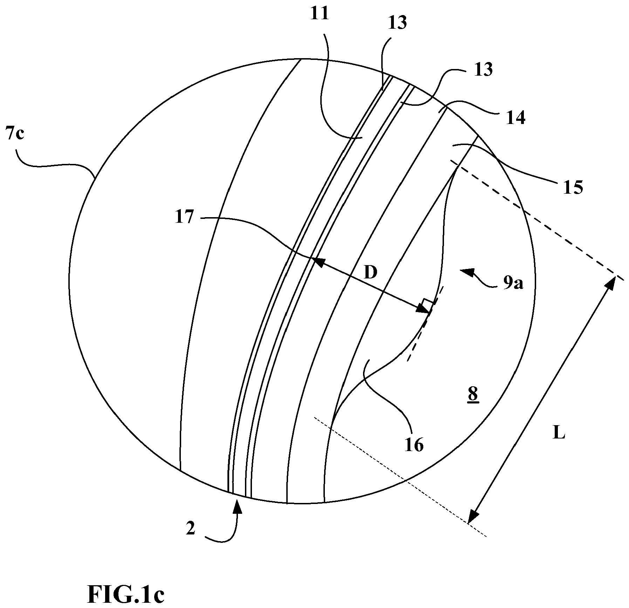

D'autres détails et caractéristiques avantageux de l'invention ressortiront ci-après de la description des exemples de réalisation de l'invention en référence aux figures 1 à 3 qui représentent :
- figure la, une vue méridienne d'un schéma d'un pneumatique selon un mode de réalisation de l'invention,
- figure 1b, une vue partielle agrandie d'une partie du schéma de la figure la,
- figure 1c, une vue partielle agrandie d'une autre partie du schéma de la figure la,
- figure 2, une représentation schématique d'une vue en coupe d'un câble d'armature de carcasse du pneumatique de la figure 1,
- figure 3, une représentation schématique d'une vue en coupe d'un premier autre exemple de câble d'armature de carcasse selon l'invention,
- figure 4, une représentation schématique d'une vue en coupe d'un deuxième autre exemple de câble d'armature de carcasse selon l'invention,
- figure 5, une vue méridienne d'un schéma d'un pneumatique illustrant la détermination d'une extrémité d'épaulement.

Les figures ne sont pas représentées à l'échelle pour en simplifier la compréhension.

Sur la figure la, le pneumatique 1, de dimension 315/80 R 22.5 Y, comprend une armature de carcasse radiale 2 ancrée dans deux bourrelets 3, autour de tringles 4. L'armature de carcasse 2 est formée d'une seule couche de câbles métalliques 11 et de deux couches de calandrage 13. L'armature de carcasse 2 est frettée par une armature de sommet 5, elle-même coiffée d'une bande de roulement 6. L'armature de sommet 5 est formée radialement de l'intérieur à l'extérieur :
- d'une couche de triangulation formée de câbles métalliques inextensibles 9.28 non frettés, continus sur toute la largeur de la nappe, orientés d'un angle égal à 65°,
- d'une première couche de travail formée de câbles métalliques inextensibles 11.35 non frettés, continus sur toute la largeur de la nappe, orientés d'un angle égal à 26°,
- d'une seconde couche de travail formée de câbles métalliques inextensibles 11.35 non frettés, continus sur toute la largeur de la nappe, orientés d'un angle égal à 18° et croisés aux câbles métalliques de la première couche de travail,
- d'une couche de protection formées de câbles métalliques élastiques 18.23.

L'ensemble de ces couches constituant l'armature de sommet 5 n'est pas représenté en détail sur les figures.

La surface intérieure 10 délimitant la cavité du pneumatique présente des irrégularités telles que des formes en bosses correspondant conformément à l'invention à des parties 9a et 9b présentant une épaisseur entre la surface intérieure 10 et l'armature de carcasse 2 plus importante que sur le reste du profil méridien du pneumatique. Les parties 9a, 9b sont conformément à l'invention les deux parties du profil du pneumatique centrées, à plus ou moins 20 mm, sur la projection orthogonale 51 des extrémités d'épaulement 52 du pneumatique sur la surface intérieure 10 du pneumatique.

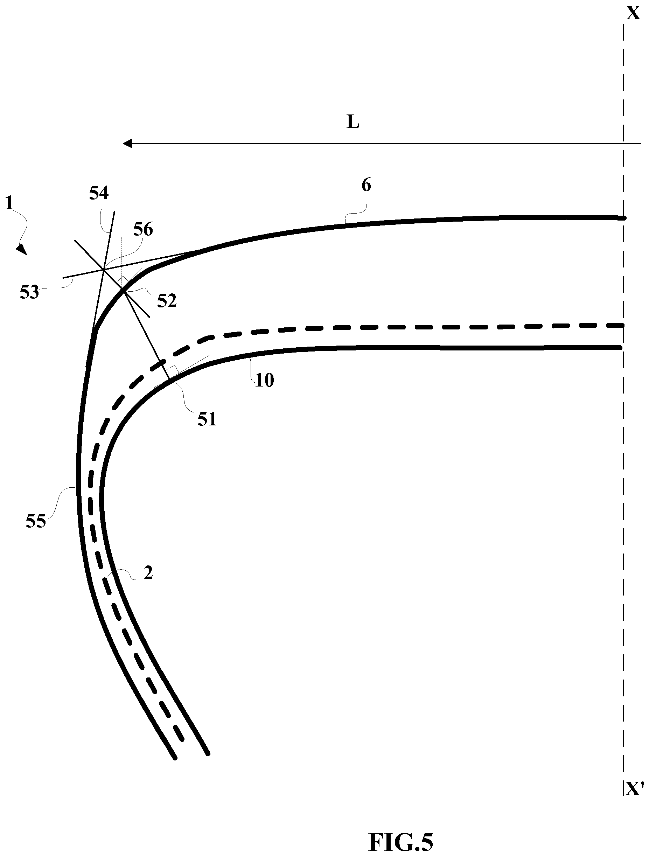

La figure 5 représente une vue méridienne d'un schéma d'un pneumatique 1 sur laquelle est tracée une première tangente 53 à la surface d'une extrémité axialement extérieure de la bande de roulement 6 ; la surface de la bande de roulement 6 est définie par la surface radialement extérieure ou sommet des sculptures, non représentées sur les figures. Une seconde tangente 54 à la surface de l'extrémité radialement extérieure d'un flanc 55 coupe la première tangente 53 en un point 56. La projection orthogonale de ce point 56 sur la surface extérieure du pneumatique définit l'extrémité d'épaulement 52. Sur la figure 5 est encore indiquée la projection orthogonale 51 des extrémités d'épaulement 52 du pneumatique sur la surface intérieure 10 du pneumatique.

La largeur axiale L de la bande de roulement peut également être mesurée entre les deux extrémités d'épaulement 52.

La figure 1b illustre un agrandissement de la zone 7b de la figure la et indique notamment l'épaisseur E de mélange caoutchouteux entre la surface intérieure 10 de la cavité 8 du pneumatique et le point 12 d'un élément de renforcement 11 le plus proche de ladite surface 10. Cette épaisseur E est égale à la longueur de la projection orthogonale du point 12 d'un élément de renforcement 11 le plus proche de ladite surface 10 sur la surface 10. Cette épaisseur E est la somme des épaisseurs des différents mélanges caoutchouteux mis en place entre ledit élément de renforcement 11 de l'armature de carcasse 2 ; il s'agit d'une part de l'épaisseur de la couche de calandrage 13 radialement intérieure de l'armature de carcasse et d'autre part, des épaisseurs e₁, e₂ des différentes couches 14, 15 de mélange caoutchouteux formant la paroi interne du pneumatique 1. Ces épaisseurs e₁, e₂ sont par ailleurs égales à la longueur de la projection orthogonale d'un point d'une surface sur l'autre surface de la couche concernée respectivement 14 ou 15.

Ces mesures d'épaisseur sont effectuées sur une coupe transversale du pneumatique, celui-ci étant par conséquent non monté et non gonflé.

La valeur de E mesurée est égale à 2.6 mm.

Les valeurs de e₁ et e₂ sont respectivement égales à 1.2 mm et 1.2 mm.

La figure 1c illustre un agrandissement de la zone 7c de la figure la et indique notamment l'épaisseur D de mélange caoutchouteux entre la surface intérieure 10 de la cavité 8 du pneumatique et le point 17 d'un élément de renforcement 11 le plus proche de ladite surface 10 au niveau de la partie 9a. Cette épaisseur D est égale à la longueur de la projection orthogonale du point 17 d'un élément de renforcement 11 le plus proche de ladite surface 10 sur la surface 10 au lieu de la plus grande épaisseur au niveau de la partie 9a. Cette épaisseur D est la somme des épaisseurs des différents mélanges caoutchouteux mis en place entre ledit élément de renforcement 11 de l'armature de carcasse 2 ; il s'agit d'une part de l'épaisseur de la couche de calandrage 13 radialement intérieure de l'armature de carcasse et d'autre part, des épaisseurs respectives des différentes couches 14, 15, 16 de mélange caoutchouteux formant la paroi interne du pneumatique 1.

La couche 15 est comme décrite précédemment pour partie composée de butyle de façon à augmenter l'étanchéité du pneumatique. La couche 14 comporte avantageusement des constituants permettant notamment de fixer l'oxygène de l'air. La diminution des épaisseurs de ces deux couches est favorable à une diminution du coût du pneumatique, les matériaux constituants ces couches présentant des coûts non négligeables. La couche 16 prévue localement sur le profil méridien du pneumatique dans la partie 9a est avantageusement semblable à la couche 14 en termes de composition pour venir renforcer la fonction de fixation de l'oxygène en plus de sa fonction « mécanique » précédemment décrite. Les parties concernées 9a et 9b correspondent aux épaules du pneumatique.

L'épaisseur D au niveau de la partie 9a est égale à 3.1 mm et donc comprise entre 2.4 et 3.9 mm.

Le rapport des épaisseurs D sur E est égal à 1.19 et donc supérieur à 1.15.

La longueur L correspondant à la longueur méridienne de la surépaisseur de la partie 9a est égale à 156 mm et donc comprise entre 60 et 200 mm. La somme des longueurs des surépaisseurs des quatre parties 9a et 9b est égale à 312 mm et correspond à 46 % de la longueur du profil méridien de la paroi 10 du pneumatique 1.

La représentation de la figure 1c montre une couche 16 supplémentaire comportant des constituants permettant notamment de fixer l'oxygène de l'air ajoutée localement au niveau de la cavité du pneumatique. La nature de la couche 16 pourrait, selon d'autres variantes de réalisation de l'invention, être différente. D'autre part, la réalisation de surépaisseurs locales pourrait encore être obtenue par exemple en modifiant localement les épaisseurs respectives de l'une et/ou l'autre des couches 14 et 15 ou bien en intercalant localement une ou plusieurs couches entre les couches 14 et 15 ou bien encore entre l'armature de carcasse 2 et la couche 14.

Des augmentations locales de l'épaisseur entre la surface intérieure 10 et l'armature de carcasse 2 vont à l'encontre de la diminution du coût du pneumatique mais conduise à un compromis endurance/coût satisfaisant.

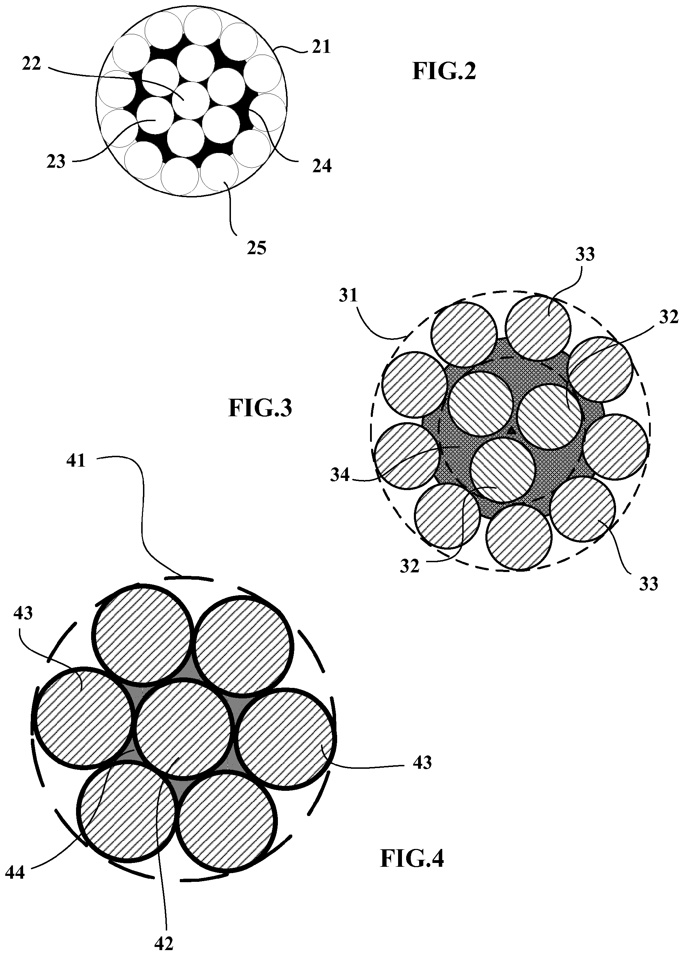

La figure 2 illustre une représentation schématique de la section d'un câble 21 d'armature de carcasse du pneumatique 1 de la figure 1. Ce câble 21 est un câble à couche de structure 1+6+12, non fretté, constitué d'un noyau central formé d'un fil 22, d'une couche intermédiaire formée de six fils 23 et d'une couche externe formée de douze fils 25.

Il présente les caractéristiques suivantes (d et p en mm) :
- structure 1+6+12 ;
- d₁ = 0.20 (mm);
- d₂ = 0.18 (mm);
- p₂ = 10 (mm)
- d₃ = 0.18 (mm);
- p₂ = 10 (mm),
- (d₂/d₃)= 1;
avec d₂, p₂, respectivement le diamètre et le pas d'hélice de la couche intermédiaire et d₃ et p₃, respectivement le diamètre et le pas de d'hélice des fils de la couche externe.

L'âme du câble constitué du noyau central formé du fil 22 et de la couche intermédiaire formée des six fils 23 est gainé par une composition de caoutchouc 24 à base d'élastomère diénique non vulcanisé (à l'état cru). Le gainage est obtenu via une tête d'extrusion de l'âme constituée du fil 22 entouré des six fils 23, suivi d'une opération finale de retordage ou câblage des 12 fils 25 autour de l'âme ainsi gainé.

L'aptitude à la pénétration du câble 31, mesurée selon la méthode décrite précédemment, est égale à 95 %.

La composition élastomérique constituant la gaine de caoutchouc 24 est réalisée à partir d'une composition telle que décrite précédemment et présente dans le cas présent la même formulation, à base de caoutchouc naturel et de noir de carbone, que celle des couches de calandrage 13 de l'armature de carcasse que les câbles sont destinés à renforcer.

La figure 3 illustre une représentation schématique de la section d'un autre câble 31 d'armature de carcasse pouvant être utilisé dans un pneumatique selon l'invention. Ce câble 31 est un câble à couche de structure 3+9, non fretté, constitué d'une âme centrale formée d'un câble constitué de trois fils 32 retordus entre eux et d'une couche externe formée de neuf fils 33.

Il présente les caractéristiques suivantes (d et p en mm) :
- structure 3+9 ;
- d₁ = 0.18 (mm);
- p₂ = 5 (mm)
- (d₁/d₂)= 1;
- d₂ = 0.18 (mm);
- p₂ = 10 (mm),
avec d₁, p1, respectivement le diamètre et le pas d'hélice des fils de l'âme centrale et d₂ et p₂, respectivement le diamètre et le pas de d'hélice des fils de la couche externe.

L'âme centrale constituée d'un câble formé des trois fils 32 a été gainée par une composition de caoutchouc 34 à base d'élastomère diénique non vulcanisé (à l'état cru). Le gainage est obtenu via une tête d'extrusion du câble 32, suivi d'une opération finale de câblage des 9 fils 33 autour de l'âme ainsi gainée.

L'aptitude à la pénétration du câble 31, mesurée selon la méthode décrite précédemment, est égale à 95 %.

La figure 4 illustre une représentation schématique de la section d'un autre câble 41 d'armature de carcasse pouvant être utilisé dans un pneumatique selon l'invention. Ce câble 41 est un câble à couche de structure 1+6, non fretté, constitué d'un noyau central formé d'un fil 42 et d'une couche externe formée de six fils 43.

Il présente les caractéristiques suivantes (d et p en mm) :
- structure 1+6 ;
- d₁ = 0,200 (mm);
- (d₁/d₂) = 1,14 ;
- d₂ = 0,175 (mm);
- p₂ = 10 (mm),
avec d₁, le diamètre du noyau et d₂ et p₂, respectivement le diamètre et le pas d'hélice des fils de la couche externe.

Le noyau central constitué du fil 42 a été gainée par une composition de caoutchouc 44 à base d'élastomère diénique non vulcanisé (à l'état cru). Le gainage est obtenu via une tête d'extrusion du fil 42, suivi d'une opération finale de câblage des 6 fils 43 autour du noyau ainsi gainé.

L'aptitude à la pénétration du câble 41, mesurée selon la méthode décrite précédemment, est égale à 95 %.

Des essais ont été réalisés avec des pneumatiques réalisés selon l'invention conformément à la représentation des figures 1 et 2, et d'autres avec des pneumatiques dits de référence.

Ces pneumatiques de référence diffèrent des pneumatiques selon l'invention par des câbles de l'armature de carcasse ne comportant la couche de gainage 24 et l'épaisseur E de mélange caoutchouteux entre la surface intérieure de la cavité du pneumatique et le point d'un élément de renforcement le plus proche de ladite surface étant égale à 3.9 mm, chacune des épaisseurs e₁ et e₂ étant respectivement égales à 1.7 mm et 2.0 mm sur tout le profil méridien du pneumatique.

Des essais d'endurance en roulage sur essieu moteur de véhicule ont été réalisés en imposant aux pneumatiques une charge de 3680 daN et une vitesse de 40 km/h, avec un gonflage des pneumatiques de 0.2 bar. Les essais ont été réalisés pour les pneumatiques selon l'invention avec des conditions identiques à celles appliquées aux pneumatiques de référence. Les roulages sont arrêtés dès que les pneumatiques présentent des dégradations de l'armature de carcasse.

Les essais ainsi réalisés ont montré que les distances parcourues lors de chacun de ces tests avec les pneumatiques selon l'invention ont permis d'atteindre des distances parcourues semblables à celles parcourues par les pneumatiques de référence.

En outre, le coût de fabrication des pneumatiques selon l'invention sont moins élevés, celui-ci étant 3 % moins élevé dans le cas des pneumatiques selon l'invention comparé à celui des pneumatiques de référence.

Par ailleurs, les pneumatiques selon l'invention présentent l'avantage d'être moins lourd avec un allègement de 3 % par rapport aux pneumatiques de référence.

## Revendications

1. Pneumatique (1) à armature de carcasse radiale (2), constituée d'au moins une couche d'éléments de renforcement métalliques, ledit pneumatique comprenant une armature de sommet (5), elle-même coiffée radialement d'une bande de roulement (6), ladite bande de roulement étant réunie à deux bourrelets (3) par l'intermédiaire de deux flancs, les éléments de renforcement métalliques (11) d'au moins une couche de l'armature de carcasse étant des câbles non frettés (21, 31, 41) présentant au test dit de perméabilité un débit inférieur à 20 cm³/min, dans un plan radial, sur au moins 50% du profil méridien du pneumatique, l'épaisseur (E) de mélange caoutchouteux entre la surface intérieure (10) de la cavité (8) du pneumatique et le point (12) d'un élément de renforcement métallique (11) de l'armature de carcasse (2) le plus proche de la dite surface intérieure (10) de la cavité (8) étant supérieure à 1.0 mm et inférieure ou égale à 3.0 mm, l'épaisseur (D) de mélange caoutchouteux entre la surface intérieure (10) de la cavité (8) du pneumatique et le point (17) d'un élément de renforcement métallique (11) de l'armature de carcasse (2) le plus proche de la dite surface intérieure (10) de la cavité (8) de deux parties (9a, 9b) du profil du pneumatique centrées, à plus ou moins 20 mm, sur la projection orthogonale (51) des extrémités d'épaulement (52) du pneumatique sur la surface intérieure (10) du pneumatique étant supérieure à 2.4 mm et inférieure ou égale à 3.9 mm, une extrémité d'épaulement étant définie, dans la zone de l'épaule du pneumatique, par la projection orthogonale sur la surface extérieure du pneumatique de l'intersection des tangentes aux surfaces d'une extrémité axialement extérieure de la bande de roulement, au sommet des sculptures, d'une part et de l'extrémité radialement extérieure d'un flanc d'autre part, le rapport entre des épaisseurs (D, E) de mélange caoutchouteux entre la surface intérieure (10) de la cavité (8) du pneumatique et le point (17, 12) d'un élément de renforcement métallique (11) de l'armature de carcasse le plus proche de la dite surface intérieure de la cavité (10) de deux parties distinctes du pneumatique étant supérieur à 1.10, **caractérisé en ce que** la longueur méridienne des deux parties (9a, 9b) du profil du pneumatique centrées, à plus ou moins 20 mm, sur la projection orthogonale (51) des extrémités d'épaulement (52) du pneumatique sur la surface intérieure (10) du pneumatique dont l'épaisseur (D) de mélange caoutchouteux entre la surface intérieure de la cavité du pneumatique et le point d'un élément de renforcement métallique de l'armature de carcasse le plus proche de la dite surface intérieure de la cavité est supérieure à 2.4 mm et inférieure ou égale à 3.9 mm est comprise entre 60 et 200 mm.

2. Pneumatique (1) selon la revendication 1, **caractérisé en ce que** les éléments de renforcement métalliques (11) d'au moins une couche de l'armature de carcasse (2) sont des câbles (21, 31, 41) à au moins deux couches et **en ce qu'**au moins une couche interne est gainée d'une couche (24, 34, 44) constituée d'une composition de caoutchouc réticulable ou réticulée, de préférence à base d'au moins un élastomère diénique.

3. Pneumatique (1) selon la revendication 1 ou 2, **caractérisé en ce que** les câbles (21, 31, 41) présentent au test dit de perméabilité un débit inférieur à 10 cm³/min et de préférence inférieur à 2 cm³/min.

4. Pneumatique (1) selon l'une des revendications précédentes, **caractérisé en ce que,** dans un plan radial, le rapport entre des épaisseurs (D, E) de mélange caoutchouteux entre la surface intérieure (10) de la cavité (8) du pneumatique et le point (17, 12) d'un élément de renforcement métallique (11) de l'armature de carcasse (2) le plus proche de la dite surface intérieure (10) de la cavité (8) de deux parties distinctes du pneumatique est supérieur ou égal à 1.15 et de préférence supérieur ou égal à 1.18.

5. Pneumatique (1) selon l'une des revendications précédentes, **caractérisé en ce que,** dans un plan radial, sur au moins la partie du profil méridien du pneumatique sur laquelle l'épaisseur (E) de mélange caoutchouteux entre la surface intérieure de la cavité du pneumatique et le point d'un élément de renforcement métallique de l'armature de carcasse le plus proche de la dite surface intérieure de la cavité est supérieure à 1.0 mm et inférieure ou égale à 3.0 mm, l'épaisseur (e₂) du mélange caoutchouteux formant la surface intérieure (10) de la cavité (8) du pneumatique est inférieure ou égale à 1.4 mm et de préférence inférieure ou égale à 1.2 mm.

6. Pneumatique (1) selon l'une des revendications précédentes, **caractérisé en ce que** les éléments de renforcement métalliques (11) d'au moins une couche de l'armature de carcasse (2) sont des câbles métalliques à couches (21, 31, 41) de construction [L+M] ou [L+M+N] utilisable comme élément de renforcement d'une armature de carcasse de pneumatique, comportant une première couche C1 à L fils de diamètre d₁ avec L allant de 1 à 4, entourée d'au moins une couche intermédiaire C2 à M fils de diamètre d₂ enroulés ensemble en hélice selon un pas p₂ avec M allant de 3 à 12, ladite couche C2 étant éventuellement entourée d'une couche externe C3 de N fils de diamètre d₃ enroulés ensemble en hélice selon un pas p₃ avec N allant de 8 à 20, et **en ce qu'**une gaine (24, 34, 44) constituée d'une composition de caoutchouc réticulable ou réticulée à base d'au moins un élastomère diénique, recouvre, dans la construction [L+M], ladite première couche C1 et, dans la construction [L+M+N], au moins ladite couche C2.

7. Pneumatique (1) selon la revendication 6, **caractérisé en ce que** le diamètre des fils de la première couche (C1) est compris entre 0.10 et 0.5 mm, et **en ce que** le diamètre des fils des couches (C2, C3) est compris entre 0.10 et 0.5 mm.

8. Pneumatique (1) selon l'une des revendications précédentes, **caractérisé en ce que** l'armature de sommet (5) est formée d'au moins deux couches de sommet de travail d'éléments de renforcement inextensibles, croisés d'une couche à l'autre en faisant avec la direction circonférentielle des angles compris entre 10° et 45°.

9. Pneumatique (1) selon l'une des revendications précédentes, **caractérisé en ce que** l'armature de sommet (5) comporte encore au moins une couche d'éléments de renforcement circonférentiels.

10. Pneumatique (1) selon l'une des revendications précédentes, **caractérisé en ce que** l'armature de sommet (5) est complétée radialement à l'extérieur par au moins une nappe supplémentaire, dite de protection, d'éléments de renforcement dits élastiques, orientés par rapport à la direction circonférentielle avec un angle compris entre 10° et 45° et de même sens que l'angle formé par les éléments inextensibles de la nappe de travail qui lui est radialement adjacente.

11. Pneumatique (1) selon l'une des revendications précédentes, **caractérisé en ce que** l'armature de sommet (5) comporte en outre une couche de triangulation formée d'éléments de renforcement métalliques faisant avec la direction circonférentielle des angles supérieurs à 60°.

## Patentansprüche

1. Reifen (1) mit radialer Karkassenarmierung (2), die von mindestens einer Schicht von metallischen Verstärkungselementen gebildet ist, der Reifen umfassend eine Scheitelarmierung (5), welche selbst radial von einem Laufstreifen (6) bedeckt ist, wobei der Laufstreifen an zwei Wülsten (3) mittels zweier Flanken zusammengeführt ist, wobei die metallischen Verstärkungselemente (11) mindestens einer Schicht der Karkassenarmierung nicht umschnürte Seile (21, 31, 41) sind, die beim Durchlässigkeitsversuch einen Durchsatz von weniger als 20 cm³/min aufweisen, wobei in einer Radialebene auf mindestens 50 % des Meridianprofils des Reifens die Gummimassen-Dicke (E) zwischen der Innenfläche (10) des Hohlraums (8) des Reifens und dem Punkt (12) eines metallischen Verstärkungselements (11) der Karkassenarmierung (2), welcher der Innenfläche (10) des Hohlraums (8) am nächsten liegt, größer als 1, 0 mm und kleiner oder gleich 3,0 mm ist, wobei die Gummimassen-Dicke (D) zwischen der Innenfläche (10) des Hohlraums (8) des Reifens und dem Punkt (17) eines metallischen Verstärkungselements (11) der Karkassenarmierung (2), welcher der Innenfläche (10) des Hohlraums (8) zweier zentrierter Abschnitte (9a, 9b) des Profils am nächsten liegt, bei mehr oder weniger 20 mm auf der orthogonalen Projektion (51) der Schulterenden (52) des Reifens auf der Innenfläche (10) des Reifens größer als 2,4 mm und kleiner oder gleich 3,9 mm ist, wobei ein Schulterende im Bereich der Schulter des Reifens durch die orthogonale Projektion auf der Außenfläche des Reifens der Überschneidung der Tangenten an den Flächen eines axial äußeren Endes des Laufstreifens am Scheitelpunkt der Skulpturen einerseits und des radial äußeren Endes einer Flanke andererseits definiert ist, wobei das Verhältnis zwischen Gummimassen-Dicken (D, E) zwischen der Innenfläche (10) des Hohlraums (8) des Reifens und dem Punkt (17, 12) eines metallischen Verstärkungselements (11) der Karkassenarmierung, welcher der Innenfläche des Hohlraums (10) zweier gesonderter Abschnitte des Reifens am nächsten liegt, größer als 1,10 ist, **dadurch gekennzeichnet, dass** die Meridianlänge der zwei zentrierten Abschnitte (9a, 9b) des Profils des Reifens bei mehr oder weniger 20 mm auf der orthogonalen Projektion (51) der Schulterenden (52) des Reifens auf der Innenfläche (10) des Reifens, wovon die Gummimassen-Dicke (D) zwischen der Innenfläche des Hohlraums des Reifens und dem Punkt eines metallischen Verstärkungselements der Karkassenarmierung, welcher der Innenfläche des Hohlraums am nächsten liegt, größer als 2,4 mm und kleiner oder gleich 3,9 mm ist, zwischen 60 und 200 mm beträgt.

2. Reifen (1) nach Anspruch 1, **dadurch gekennzeichnet, dass** die metallischen Verstärkungselemente (11) mindestens einer Schicht der Karkassenarmierung (2) Seile (21, 31, 41) mit mindestens zwei Schichten sind, und dadurch, dass mindestens eine Innenschicht mit einer Schicht (24, 34, 44) umhüllt ist, die aus einer vernetzbaren oder vernetzten Gummizusammensetzung, vorzugsweise auf Basis von mindestens einem Dien-Elastomer, gebildet ist.

3. Reifen (1) nach Anspruch 1 oder 2, **dadurch gekennzeichnet, dass** die Seile (21, 31, 41) beim Durchlässigkeitsversuch einen Durchsatz von weniger als 10 cm³/min und vorzugsweise weniger als 2 cm³/min aufweisen.

4. Reifen (1) nach einem der vorhergehenden Ansprüche, **dadurch gekennzeichnet, dass** in einer Radialebene das Verhältnis zwischen Gummimassen-Dicken (D, E) zwischen der Innenfläche (10) des Hohlraums (8) des Reifens und dem Punkt (17, 12) eines metallischen Verstärkungselements (11) der Karkassenarmierung (2), welcher der Innenfläche (10) des Hohlraums (8) zweier gesonderter Abschnitte des Reifens am nächsten liegt, größer oder gleich 1,15 und vorzugsweise größer oder gleich 1,18 ist.

5. Reifen (1) nach einem der vorhergehenden Ansprüche, **dadurch gekennzeichnet, dass** in einer Radialebene zumindest auf dem Abschnitt des Meridianprofils des Reifens, auf dem die Gummimassen-Dicke (E) zwischen der Innenfläche des Hohlraums des Reifens und dem Punkt eines metallischen Verstärkungselements der Karkassenarmierung, welcher der Innenfläche des Hohlraums am nächsten liegt, größer als 1,0 mm und kleiner oder gleich 3,0 mm ist, die Dicke (e₂) der Gummimasse, die die Innenfläche (10) des Hohlraums (8) des Reifens bildet, kleiner oder gleich 1,4 mm und vorzugsweise kleiner oder gleich 1,2 mm ist.

6. Reifen (1) nach einem der vorhergehenden Ansprüche, **dadurch gekennzeichnet, dass** die metallischen Verstärkungselemente (11) mindestens einer Schicht der Karkassenarmierung (2) metallische Seile mit Schichten (21, 31, 41) zum Aufbau [L+M] oder [L+M+N] sind, die als Verstärkungselement einer Karkassenarmierung eines Reifens nutzbar ist, umfassend eine erste Schicht C1 mit L Drähten eines Durchmessers d₁, wobei L von 1 bis 4, geht, die von mindestens einer Zwischenschicht C2 mit M Drähten eines Durchmessers d₂ umgeben ist, die entsprechend einem Abstand p₂ spiralförmig zusammen aufgerollt sind, wobei M von 3 bis 12 geht, wobei die Schicht C2 eventuell von einer Außenschicht C3 von N Drähten eines Durchmessers d₃ umgeben ist, die entsprechend einem Abstand p₃ spiralförmig zusammen aufgerollt sind, wobei N von 8 bis 20 geht, und dadurch, dass eine Umhüllung (24, 34, 44), die von einer vernetzbaren oder vernetzten Gummizusammensetzung auf der Basis von mindestens einem Dien-Elastomer gebildet ist, in dem Aufbau [L+M] die erste Schicht C1 und in dem Aufbau [L+M+N] mindestens die Schicht C2 bedeckt.

7. Reifen (1) nach Anspruch 6, **dadurch gekennzeichnet, dass** der Durchmesser der Drähte der ersten Schicht (C1) zwischen 0,10 und 0,5 liegt, und dadurch, dass der Durchmesser der Drähte der Schichten (C2, C3) zwischen 0,10 und 0,5 mm liegt.

8. Reifen (1) nach einem der vorhergehenden Ansprüche, **dadurch gekennzeichnet, dass** die Scheitelarmierung (5) von mindestens zwei Scheitel-Arbeitsschichten aus nicht ausdehnbaren Verstärkungselementen gebildet ist, die durch Bilden von Winkeln zwischen 10° und 45° mit der Umfangsrichtung von einer Schicht zur anderen gekreuzt sind.

9. Reifen (1) nach einem der vorhergehenden Ansprüche, **dadurch gekennzeichnet, dass** die Scheitelarmierung (5) noch mindestens eine Schicht von Verstärkungselementen in Umfangsrichtung aufweist.

10. Reifen (1) nach einem der vorhergehenden Ansprüche, **dadurch gekennzeichnet, dass** die Scheitelarmierung (5) von mindestens einer zusätzlichen Lage, Schutzlage genannt, von elastischen Verstärkungselementen radial außen vervollständigt wird, die bezogen auf die Umfangsrichtung mit einem Winkel zwischen 10° und 45° und derselben Richtung wie der Winkel, der von den nicht ausdehnbaren Elementen der Arbeitslage gebildet ist, die ihr radial benachbart ist, ausgerichtet sind.

11. Reifen (1) nach einem der vorhergehenden Ansprüche, **dadurch gekennzeichnet, dass** die Scheitelarmierung (5) ferner eine Triangulationsschicht aufweist, die aus metallischen Verstärkungselementen gebildet ist, die mit der Umfangsrichtung Winkel größer als 60° bilden.

## Claims

1. Tyre (1) with a radial carcass reinforcement (2), made up of at least one layer of metal reinforcing elements, the said tyre comprising a crown reinforcement (5), itself capped radially by a tread (6), the said tread being connected to two beads (3) by two sidewalls, the metal reinforcing elements (11) of at least one layer of the carcass reinforcement being non-wrapped cords (21, 31, 41) which, in the test referred to as the permeability test, return a flow rate of less than 20 cm³/min, in a radial plane, over at least 50% of the meridian profile of the tyre, the thickness (E) of rubber compound between the interior surface (10) of the tyre cavity (8) and the point (12) of a metal reinforcing element (11) of the carcass reinforcement (2) closest to the said interior surface (10) of the cavity (8) being greater than 1.0 mm and less than or equal to 3.0 mm, the thickness (D) of rubber compound between the interior surface (10) of the tyre cavity (8) and the point (17) of a metal reinforcing element (11) of the carcass reinforcement (2) closest to the said interior surface (10) of the cavity (8) of two parts (9a, 9b) of the tyre profile which, to within 20 mm, are centred on the orthogonal projection (51) of the shoulder ends (52) of the tyre onto the interior surface (10) of the tyre being greater than 2.4 mm and less than or equal to 3.9 mm, a shoulder end being defined, in the shoulder region of the tyre, by the orthogonal projection onto the exterior surface of the tyre of the intersection of the tangents to the surfaces of an axially external end of the tread, at the top of the tread blocks, on the one hand and of the radially external end of a sidewall on the other, the ratio between thicknesses (D, E) of rubber compound between the interior surface (10) of the tyre cavity (8) and the point (17, 12) of a metal reinforcing element (11) of the carcass reinforcement closest to the said interior surface (10) of the cavity of two distinct parts of the tyre being greater than 1.10, **characterized in that** the meridian length of the two parts (9a, 9b) of the profile of the tyre which, to within 20 mm, are centred on the orthogonal projection (51) of the shoulder ends (52) of the tyre onto the interior surface (10) of the tyre of which the thickness (D) of rubber compound between the interior surface of the cavity of the tyre and the point of a metal reinforcing element of the carcass reinforcement closest to the said interior surface of the cavity is greater than 2.4 mm and less than or equal to 3.9 mm is between 60 and 200 mm.

2. Tyre (1) according to Claim 1, **characterized in that** the metal reinforcing elements (11) of at least one layer of the carcass reinforcement (2) are cords (21, 31,41) having at least two layers and **in that** at least an inner layer is sheathed with a layer (24, 34, 44) consisting of a crosslinkable or crosslinked rubber composition, preferably based on at least one diene elastomer.

3. Tyre (1) according to Claim 1 or 2, **characterized in that** the cords in the test referred to as the permeability test return a flow rate of less than 10 cm³/min and preferably of less than 2 cm³/min.

4. Tyre (1) according to one of the preceding claims, **characterized in that,** in a radial plane, the ratio between thicknesses (D, E) of rubber compound between the interior surface (10) of the cavity (8) of the tyre and the point (17, 12) of a metal reinforcing element (11) of the carcass reinforcement (2) closest to the said interior surface (10) of the cavity (8) of two distinct parts of the tyre is greater than or equal to 1.15 and preferably greater than or equal to 1.18.

5. Tyre (1) according to one of the preceding claims, **characterized in that,** in a radial plane, over at least the part of the meridian profile of the tyre over which the thickness (E) of rubber compound between the interior surface of the cavity of the tyre and the point of a metal reinforcing element of the carcass reinforcement closest to the said interior surface of the cavity is greater than 1.0 mm and less than or equal to 3.0 mm, the thickness (e₂) of rubber compound forming the interior surface (10) of the cavity (8) of the tyre is less than or equal to 1.4 mm and preferably less than or equal to 1.2 mm.

6. Tyre (1) according to one of the preceding claims, **characterized in that** the metal reinforcing elements (11) of at least one layer of the carcass reinforcement (2) are layered metal cords (21, 31, 41) of [L+M] or [L+M+N] construction that can be used as reinforcing elements in a tyre carcass reinforcement, comprising a first layer C1 of L threads of diameter d₁ , with L ranging from 1 to 4, surrounded by at least one intermediate layer C2 of M threads of diameter d₂ wound together in a helix at a pitch p₂ with M ranging from 3 to 12, the said layer C2 possibly being surrounded by an outer layer C3 of N threads of diameter d₃ wound together in a helix at a pitch p₃ with N ranging from 8 to 20, and **in that** a sheath (24, 34, 44) made of a crosslinkable or crosslinked rubber composition based on at least one diene elastomer covers the said first layer C1 in the [L+M] construction and at least the said layer C2 in the [L+M+N] construction.

7. Tyre (1) according to Claim 7, **characterized in that** the diameter of the threads of the first layer (C1) is between 0.10 and 0.5 mm, and **in that** the diameter of the threads of the layers (C2, C3) is between 0.10 and 0.5 mm.

8. Tyre (1) according to one of the preceding claims, **characterized in that** the crown reinforcement (5) is formed of at least two working crown layers of inextensible reinforcing elements, crossed from one layer to the other, forming, with the circumferential direction, angles of between 10° and 45°.

9. Tyre (1) according to one of the preceding claims, **characterized in that** the crown reinforcement (5) further comprises at least one layer of circumferential reinforcing elements.

10. Tyre (1) according to one of the preceding claims, **characterized in that** the crown reinforcement (5) is supplemented radially on the outside by at least one additional ply, referred to as a protective ply, of reinforcing elements, referred to as elastic reinforcing elements, oriented with respect to the circumferential direction at an angle of between 10° and 45° and in the same direction as the angle formed by the inextensible elements of the working ply radially adjacent to it.

11. Tyre (1) according to one of the preceding claims, **characterized in that** the crown reinforcement (5) further includes a triangulation layer formed of metal reinforcing elements forming with the circumferential direction angles of more than 60°.
